Europäisches Patentamt

European Patent Office

Office européen des brevets

(11) Numéro de publication: **0 162 788**
**A1**

# (12) DEMANDE DE BREVET EUROPEEN

(21) Numéro de dépôt: **85420062.3**

(22) Date de dépôt: **01.04.85**

(51) Int. Cl.⁴: **C 08 J 5/18**
**C 08 J 7/04, G 11 B 5/704**

(30) Priorité: **03.04.84 FR 8405441**

(43) Date de publication de la demande:
**27.11.85 Bulletin 85/48**

(84) Etats contractants désignés:
**DE FR GB NL**

(71) Demandeur: **RHONE-POULENC FILMS**
**25, quai Paul Doumer**
**F-92408 Courbevoie(FR)**

(72) Inventeur: **Miquel, Huguette**
**6, rue des Platanes**
**F-69630 Chaponost(FR)**

(72) Inventeur: **Corsi, Philippe**
**La Duchère 336 C Balmont-Ouest**
**F-69009 Lyon(FR)**

(74) Mandataire: **Chichery, Guy et al,**
**RHONE-POULENC RECHERCHES Service Brevets Chimie**
**et Polymères Centre de Recherches de Saint-Fons B.P. 62**
**F-69192 St-Fons Cédex(FR)**

(54) **Films minces polyester étirés chargés à faible rugosité - procédé d'obtention - utilisation de ces films pour la fabrication de bandes magnétiques.**

(57) La présente invention concerne des films minces polyester étirés chargés, monocouche ou composites et comportant au moins une couche extérieure chargée ayant une rugosité totale inférieure à 0,15 micron, cette couche chargée contenant de 0,02 à 0,3 % d'une charge fine (oxyde de titane ...), de diamètre médian inférieur à 0,5 micron et un facteur de forme de volume supérieur à 0,08 et moins de 0,02 % d'une charge grossière (carbonate de calcium ...) ayant un diamètre médian compris égal ou supérieur à 0,5 micron.

Ces films sont utilisables pour la fabrication de bandes magnétiques, notamment de bandes vidéo.

EP 0 162 788 A1

Croydon Printing Company Ltd.

## FILMS MINCES POLYESTER ETIRES CHARGES A FAIBLE RUGOSITE -
## PROCEDE D'OBTENTION -
## UTILISATION DE CES FILMS POUR LA FABRICATION DE BANDES MAGNETIQUES

La présente invention concerne de nouveaux films polyester minces étirés, à rugosité de surface particulièrement faible et utilisables notamment comme support de bandes magnétiques.

Afin de pouvoir être valablement utilisés comme supports de bandes magnétiques, les films doivent répondre en particulier à deux exigences qui en pratique s'avèrent être contradictoires.

Selon la première exigence, ces films devront présenter un bon glissant durant les diverses opérations d'enroulement rencontrées au stade de leur fabrication industrielle (production du film, enduction du film, découpage ...) ou encore au stade de leurs utilisations (bobinage et rembobinage en cassettes) ; les films devront ainsi présenter une certaine rugosité et simultanément pour des raisons évidentes une bonne tenue aux phénomènes d'abrasion et de fatigue.

Selon la deuxième exigence, il est nécessaire au contraire d'utiliser des films peu rugueux ayant une surface la plus lisse possible, afin d'éviter au maximum les défauts de reproduction des signaux magnétiques qui seront enregistrés.

L'évolution des films notamment, polyester, dans le domaine de la vidéo est telle que l'on cherche à mettre au point des films de moins en moins rugueux (pratiquement lisses) particulièrement appropriés pour recevoir directement une très mince pellicule superficielle métallique magnétique (dépôt direct de chrome par technique d'évaporation sous vide ...). Ces films supports doivent avoir alors une épaisseur inférieure à 20 microns et préférentiellement inférieure à 10 microns et une rugosité au plus égale à 0,15 micron (la rugosité étant mesurée selon une méthode qui sera rappelée plus loin).

On connait déjà de tels films polyester pour bandes vidéo. On sait, en particulier, que l'on peut obtenir à partir de dioxyde de titane finement divisé des films polyester biétirés ayant une rugosité totale inférieure à 0,1 micron. Mais de tels films ont une valeur du haze élevée et une résistance insuffisante à l'abrasion.

On a également indiqué la possibilité d'obtenir des films biétirés, de faible rugosité, en introduisant dans la composition polyester une population de particules inertes constituées par deux charges de nature différente. C'est ainsi que l'on trouve décrits dans les demandes de brevets japonais 78/125 479 et 79/15 979 des films chargés obtenus en utilisant à titre de particules inertes une charge fine (kaolin ou silice) et une charge de diamètre médian plus important, dite charge "grossière" (kaolin ; carbonate de calcium). Ces films dans lesquels on a introduit une très faible quantité globale de charge (celle-ci est inférieure à 200 ppm), ont cependant une rugosité totale supérieure à 0,1 micron.

Dans la demande de brevet européen 0 124 291 on trouve décrit des films polyester biorientés dont la rugosité moyenne $R_{CLA}$ et le coefficient de friction $\mu_k$ sont liés par les inéquations suivantes :

$$0,10 \leqslant 10 \, R_{CLA} + \mu_k \leqslant 0,31$$

Ces films sont obtenus en introduisant dans la composition polyester des charges caractéristiques dont la nature est soit du dioxyde de titane soit un mélange de dioxyde de titane et de carbonate. Il est spécifié qu'il est obligatoire que les 2 charges aient une répartition granulométrique spécifique, celle-ci étant caractérisée par un facteur $\gamma$ compris entre 1,2 et 2,3 pour le dioxyde de titane et entre 1,5 et 2,3 pour le carbonate de calcium. Le facteur $\gamma$ est défini comme le rapport $D_{25}/D_{75}$. $D_{25}$ et $D_{75}$ représentent respectivement le diamètre de la particule correspondant à 25 % et 75 % du poids cumulé de la charge, la mesure commençant à partir des plus grosses particules.

Ces charges sont obtenues par centrifugation de suspension de particules, puis filtration. Elles sont introduites à raison de 100 à 25 000 ppm pour $TiO_2$ et de 100 à 3 000 ppm pour $CaCO_3$. Le procédé de préparation des charges apparait être un inconvénient du procédé.

La présente invention a donc pour objet des films minces chargés et étirés ayant une rugosité très faible sur au moins une face (en général inférieure ou égale à 0,15 micron) et ayant un ensemble satisfaisant de propriétés (coefficients de frottement film/métal et coefficient de friction film/film peu élevés ; bonne résistance à l'abrasion ...), et obtenables en introduisant directement dans la composition polyester des charges fines facilement accessibles.

Plus précisément, l'objet de la présente invention est constitué par des films minces polyester étirés chargés, monocouche ou composites, ayant une rugosité totale faible sur au moins une face et comportant au moins une couche polyester (A) et au moins une couche polymérique (B) externe chargée, la couche (B) pouvant être confondue avec la couche (A), les films étant caractérisés en ce que la couche (B) contient :

- 0,02 à 0,3 % d'une charge fine ayant un facteur de forme au moins égal à 0,08, la charge fine ayant un diamètre médian en volume inférieur à 0,5 micron.

- et moins de 0,02 % d'une charge grossière ayant un diamètre médian en volume égal ou supérieur à 0,5 micron, la charge grossière étant de nature différente de celle de la charge fine.

Les films selon l'invention sont des films minces étirés chargés, pleine masse (ou monocouche, les couches (A) et (B) étant alors confondues), ou des films composites (ou multicouches) contenant au moins sur une de leur face externe une couche (B) chargée telle que précédemment définie.

Il doit être entendu dans le cadre de la présente invention que l'on désigne par film étiré tout film obtenu après au moins un étirage monodirectionnel effectué sur un film amorphe, de manière à conférer au film un ensemble satisfaisant de propriétés mécaniques (module élevé, bonne stabilité dimensionnelle ...). Il peut donc s'agir d'un monoétirage ou d'un biétirage effectué successivement ou simultanément dans deux directions en général orthogonales. Par ailleurs, chaque étirage monodirectionnel peut lui-même être effectué en plusieurs étapes. Enfin, on peut associer des séquences d'étirage comme par exemple deux traitements successifs de biétirage ...

Les charges fines et grossières diffèrent entre elles par leur taille et par leur nature. Au sens de l'invention, le terme nature se rapporte soit à l'arrangement cristallin, soit à la composition chimique. Dans le cadre de l'invention, les charges pourront simultanément avoir des compositions chimiques et des structures cristallines différentes ; on pourra utiliser des charges naturelles ou des poudres artificielles obtenues par tout procédé chimique adapté. Préférentiellement, les charges fine et grossière auront une nature chimique différente.

En ce qui concerne la répartition granulométrique des charges introduites celle-ci n'apparait pas être critique et notamment il n'existe pas de contrainte pour le paramètre $\gamma$ de la charge grossière ; le paramètre $\gamma$ a été défini dans le paragraphe ci-avant relatif au brevet européen 0 124 291. Pour la charge grossière le paramètre $\gamma$ peut sans préjudice pour les qualités du film être supérieur à 2,3.

Les films, selon la présente invention, auront en général sur leur face externe (B) chargée une rugosité totale au plus égale à 0,15 micron et le plus souvent inférieure à 0,1 micron.

La rugosité d'un film s'exprime généralement au moyen de deux valeurs :

- une valeur correspondant à la rugosité totale $R_t$.
- une valeur correspondant à la rugosité moyenne $R_a$ (également appelée CLA selon les termes anglais "center line average").

La rugosité totale $R_t$ et la rugosité moyenne $R_a$ sont. définies et leur mesure est décrite dans la norme internationale ISO R 468.

Le diamètre médian en volume est le diamètre sphérique correspondant à 50 % du volume de l'ensemble des particules lu sur la courbe de distribution cumulée reliant le % volumique au diamètre des particules.

Par diamètre équivalent sphérique d'une particule, on entend le diamètre d'une sphère ayant un volume équivalent à celui de la particule.

La distribution des tailles de particules est déterminée par photométrie sous centrifugation (appareillage Horiba/capa 500).

Cette méthode permet de mesurer la variation d'absorbance

$$Ln \frac{I_o}{I}$$

due à la sédimentation des particules en fonction du temps (t)

$$Ln \left[ \frac{I_o}{I} \right]_o^{d\ max} = K \int_{d=o}^{d\ max} E(d) \frac{n_3(d)}{d} d(d)$$

$I_o$ : lumière transmise par le liquide pur

$I$ : lumière transmise par la suspension

$K$ : constante fonction de la concentration de la suspension et de l'épaisseur de la cellule.

$E(d)$ : coefficient d'extinction (pris égal à 1 quelque soit le diamètre).

$n_3(d)$ : distribution en volume de la taille des particules.

La vitesse de sédimentation est reliée au diamètre équivalent sphérique des particules par la formule de Stockes.

$$d = \sqrt{\sqrt{\frac{18\,\eta_o\,Ln(x_2/x_1)}{(\rho - \rho_o)\,w^2\,t}}}$$

$\eta_o$ : viscosité du liquide pur

$x_2 - x_1$ : hauteur de chute des particules

$\rho$ : densité de la particule étudiée

$\rho_o$ : densité du liquide

$w$ : vitesse angulaire de rotation de la cellule de mesure.

Le facteur de forme de volume d'une particule se définit comme le rapport entre le volume de la particule et le cube du diamètre maximal de la particule projeté sur un plan de référence. (voir aussi ouvrage de T. ALLEN : "particles size measurements" - 3thrd edition (1981) - éditeurs : Chapman and Hall Limited).

Dans le cadre de l'invention, la charge fine pourra donc avoir un facteur de forme de volume au plus égal à $\pi/6$ (particules entièrement sphériques).

Les descriptions qui vont suivre se rapportent maintenant à la couche (B) caractéristique de l'invention

De préférence, les films selon la présente invention sont tels que, dans leur couche caractéristique (B), la charge grossière ait un diamètre médian en volume compris entre 0,5 micron et 2,5 microns. Avantageusement, ce diamètre médian sera compris entre 0,5 et 1,5 microns.

La nature de la charge fine peut dans cette couche (B) être très variée (calcite, silice, dioxyde de titane, sulfate de baryum ...).

Avantageusement, on utilise à titre de charge fine du dioxyde de titane ayant éventuellement subi un traitement de modification de sa surface.

La nature de la charge grossière peut être très variée ; on peut utiliser par exemple un aluminosilicate calciné ou hydraté, du carbonate de calcium, du silicate de calcium, du phosphate de calcium, du sulfate de baryum, de la silice ...

Le facteur de forme de volume de la charge grossière n'est pas critique. Ainsi, si on emploie du carbonate de calcium à titre de charge grossière, on peut mettre en oeuvre de la calcite ou de l'aragonite.

Préférentiellement, la distribution granulométrique de la charge grossière est telle qu'il n'y a pas plus de 10 % de charge en volume ayant un diamètre supérieur à 2,5 microns. Très avantageusement, la charge grossière contient moins de 5 % en volume de particules ayant un diamètre supérieur à 2,5 microns.

Selon une variante préférentielle de l'invention, la charge fine est du dioxyde de titane et la charge grossière est du carbonate de calcium.

On mettra en oeuvre préférentiellement, selon une variante de l'invention, une quantité de charge fine représentant de 0,05 à 0,20 % en poids de la couche (B), ainsi qu'une quantité de charge grossière représentant 0,005 à 0,02 % en poids de la couche (B).

La nature chimique de la couche B peut être très variée. Il peut s'agir notamment d'un film de polyester ayant éventuellement subi un ou plusieurs traitement d'étirage tels que préalablement indiqués. Il peut également s'agir d'une couche dont la nature chimique par elle-même n'est pas critique et constituée par un liant polymérique (résine thermoplastique ou thermodurcissable), associée le cas échéant à divers agents de réticulation conventionnels (polyisocyanates, polyacrylates ...) et contenant la charge fine et la charge grossière telles que précédemment définies. Ces résines peuvent être durcies conventionnellement soit chimiquement soit par irradiation.

Selon une variante préférentielle la couche (B) est en polyester.

Les films selon l'invention peuvent, comme on l'a déjà dit, être des films minces monocouches (ayant donc des faces externes symétriques) ou des films multicouches ou composites ayant au moins 2 couches différentes et pouvant avoir des faces externes symétriques ou asymétriques.

Selon une autre variante préférentielle de la présente invention, les films monocouches ou composites sont constitués en totalité de couches polyester.

Enfin selon une autre variante avantageuse de la présente invention, les films tels que précédemment définis ont subi un traitement d'étirage dans au moins deux directions orthogonales entre elles.

Les polyesters qui peuvent être utilisés pour préparer les films selon l'invention peuvent être tout polyester, filmogène linéaire ou essentiellement linéaire, tels qu'obtenus à partir d'un ou de plusieurs diacide(s) carboxylique(s) ou de leurs esters d'alkyle inférieur, (acide téréphtalique, acide isophtalique, acide naphtalènedicarboxylique-2,5, acide naphtalènedicarboxylique-2,6, acide naphtalènedicarboxylique-2,7, acide succinique, acide sébacique, acide adipique, acide azélaïque, l'acide diphényldicarboxylique et acide hexahydrotéréphtalique) et d'un ou plusieurs diols ou polyols comme l'éthylèneglycol, le propanediol-1,3, le butanediol-1,4, le néopentylglycol et le cyclohexanediméthanol-1,4, les polyoxyalkylèneglycol (polyoxyéthylèneglycol, polyoxypropylèneglycol ou leurs copolymères statistiques ou séquencés).

Selon une variante de l'invention, le polyester peut comporter divers groupements hydrosolubles tels que des groupements sulfonates ... (ces groupements sont en général apportés par le réactif acide) ou encore des groupements polyoxyéthylène (apportés en général par le diol ou polyol).

Généralement, les polyesters utilisés sont des homopolymères ou des copolymères comportant essentiellement des motifs téréphtalates d'alkylène ; de préférence les dits polyesters comportent au moins 80 % en poids de motifs téréphtalate d'éthylèneglycol et, plus préférentiellement encore, au moins 90 % en poids de tels motifs. Le polyester peut être également un polycondensat résultant du mélange de plusieurs homopolymères dont 80 % en poids et de préférence 90 % en poids sont du polytéréphtalate d'éthylèneglycol.

Avantageusement, le polyester est un polytéréphtalate d'éthylène glycol dont la viscosité intrinsèque mesurée à 25°C dans l'o-chlorophénol est comprise entre 0,6 et 0,75 dl/g.

La préparation de tels polyesters est connue en soi. Les catalyseurs, stabilisants et additifs mis en oeuvre ne sont pas critiques. Ces derniers doivent être cependant choisis de telle manière qu'ils n'engendrent pas, au sein de la résine polyester allant constituer la couche (B), des particules solides provenant des résidus catalytiques et susceptibles de modifier de manière néfaste et incontrôlée l'état de surface. Eventuellement, les catalyseurs ou encore les oligomères présents dans le polyester peuvent engendrer des particules de taille minime dont les dimensions n'influent pas sur l'état de surface du film.

Les charges seront de préférence introduites en fin de phase d'estérification ou d'interéchange, sous la forme d'une suspension des particules dans le diol utilisé, (ou encore selon une variante possible dans l'un des diols utilisés).

De telles suspensions peuvent être réalisées par simple broyage de la charge ou des charges dispersées dans le diol approprié ; il peut également s'agir d'un broyage suivi d'une centrifugation ou d'une filtration qui permet d'éliminer les particules les plus grosses et les agglomérats de particules ; les suspensions de charge peuvent aussi être homogénéisées par des techniques connues, telles que par exemple un traitement approprié à l'aide d'ultrasons. Ces techniques permettent d'ajuster le diamètre médian en volume et les distributions granulométriques.

Pour la préparation des films selon l'invention, on peut opérer notamment selon les variantes de procédé suivantes :

- les deux charges peuvent être introduites sous la forme de deux suspensions dans le diol approprié ou encore sous la forme d'une suspension commune des deux charges dans le diol, pendant la fabrication du polyester

- chacune des charges peut être introduite dans un lot différent de polyester, les deux polyesters chargés respectivement par la charge fine et la charge grossière ainsi obtenus étant ensuite mélangés avant l'extrusion avec si nécessaire un polyester non chargé (technique dite des mélanges maîtres permettant notamment d'utiliser selon une variante de cette technique des polyesters chargés ayant une concentration

en charge plus importante que celle du polyester final).

Cette dernière variante présente l'avantage pratique de permettre de préparer des films selon l'invention, comportant diverses proportions respectives de charges fine et grossière, en n'utilisant que deux lots de polyester monochargés et si nécessaire un lot de polyester non chargé.

Les films minces polyester étirés chargés, monocouches ou composites selon l'invention peuvent être préparés par des procédés variés conventionnels. La couche (B) caractéristique de l'invention peut être produite soit par une technique d'extrusion ou de coextrusion suivie d'un traitement approprié d'étirage, soit par un procédé d'enduction réalisé sur un film notamment polyester, monocouche ou composite éventuellement étiré, le procédé d'enduction pouvant le cas échéant être complété par un traitement d'étirage, et éventuellement réticulation.

Un autre objet de la présente invention est donc constitué par un procédé d'obtention de films minces polyester étirés chargés, par extrusion ou coextrusion d'un film amorphe soumis ultérieurement à un traitement d'étirage, le film amorphe ou éventuellement étiré étant le cas échéant enduit par une couche polymérique chargée, le procédé étant caractérisé en ce que l'on introduit à titre d'agents glissants dans au moins une composition polymérique filmogène une charge constituée par :

- une charge fine de diamètre médian en volume inférieur à 0,5 micron, ayant un facteur de forme supérieur à 0,08 et représentant de 0,02 à 0,3 % en poids de la couche
- une charge grossière de diamètre médian en volume égal ou supérieur à 0,5 micron et représentant moins de 0,02 % en poids de la couche.

Selon une variante préférentielle, les films monocouches ou composites sont préparés par extrusion ou coextrusion d'au moins un polyester chargé, le film amorphe étant soumis ultérieurement à un traitement d'étirage, le procédé étant caractérisé en ce que l'on introduit dans au moins une composition polyester une charge constituée par :

- une charge fine de diamètre médian en volume inférieur à 0,5 micron, ayant un facteur de forme supérieur à 0,08 et représentant de 0,02 à 0,3 % en poids du polyester

- une charge grossière de diamètre médian en volume supérieur ou égal à 0,5 micron et représentant moins de 0,02 % en poids du polyester.

La présente invention est également constituée par un procédé d'obtention des films polyester minces chargés et étirés, caractérisé en ce que l'on prépare un film polyester monocouche ou composite par extrusion, puis enduit avant ou après étirage le dit film avec une composition polymérique ou prépolymérique comportant une charge constituée par :

- une charge fine de diamètre médian en volume inférieur à 0,5 micron, ayant un facteur de forme supérieur à 0,08 et représentant de 0,02 à 0,3 % en poids de la couche

- une charge grossière de diamètre médian en volume compris entre 0,5 micron et 2,5 microns et représentant moins de 0,02 % en poids de la couche.

A titre d'exemple, la présente invention permet de préparer des films pleine masse chargés étirés biaxialement par extrusion d'une composition polyester en un film amorphe contenant les charges, puis en étirant ce film amorphe de manière connue en soi. L'étirage peut être effectué de manière successive : tout d'abord un étirage dans la direction de la machine (étirage longitudinal) suivi d'un étirage perpendiculaire à la direction de la machine (étirage transversal) ou l'inverse, c'est-à-dire un étirage transversal suivi d'un étirage longitudinal.

Généralement, l'étirage longitudinal est effectué avec un taux de 3 à 5 (c'est-à-dire que la longueur du film étiré représente de 3 à 5 fois la longueur du film amorphe) et à une température de 80° à 100°C et l'étirage transversal est effectué avec un taux de 3 à 5 à une température de 90° à 120°C.

L'étirage peut également être effectué de manière simultanée, c'est-à-dire simultanément dans le sens longitudinal et dans le sens transversal, par exemple avec un taux de 3 à 5 et à une température de 80° à 100°C.

Après l'étirage le film est thermofixé de manière également connue en soi, en général à une température de 180° à 230°C.

Les films ainsi préparés ont généralement une épaisseur de 2 à 100 microns et préférentiellement 6 à 25 microns selon l'usage auquel on les destine.

Selon une autre illustration de la présente invention, on peut fabriquer dans des conditions analogues des films minces coextrudés biétirés dont une des couches aura les caractéristiques de charge et de propriétés de films tels que les films pleine masse de la présente invention. L'autre ou les autres couches pourront alors être des couches minces de polyester biétirés éventuellement chargés et dont les compositions ne sont pas en elle-mêmes critiques. Les films composites auront généralement une épaisseur comprise entre 10 et 150 microns.

Les films, selon l'invention, présentent sur leur(s) face(s) caractéristique de bonnes propriétés de surface permettant leur utilisation pour des applications exigeantes telles que les bandes magnétiques pour vidéo.

Généralement, la rugosité totale $R_t$ (telle que définie précédemment) des films selon l'invention varie de 0,05 à 0,15 et est habituellement inférieure à 0,1 micron. Avantageusement, les films auront leurs faces extérieures symétriques.

La rugosité totale est mesurée selon la norme internationale à l'aide d'un appareil PERTHEN W 5 B.

La mesure correspond à la moyenne de 10 résultats, les divers "facteurs de mesure" étant choisis de la manière suivante :
- valeur de la longueur d'onde limite ou cut-off : 0,08 mm ;
- longueur de palpage : 1,5 mm ;
- rayon de courbure du palpeur : 3 microns ;
- force d'appui du palpeur : 30 mg.

Quand à la rugosité moyenne $R_a$ également définie précédemment, elle varie habituellement de 0,005 à 0,01 micron.

Outre leur faible rugosité, les films minces chargés et biétirés selon l'invention ont des coefficients de frottement film/film et film/métal faibles, une valeur de haze réduite ainsi qu'une bonne résistance à l'abrasion.

Les caractéristiques des films selon l'invention sont déterminées comme suit :

Coefficient de frottement film/métal : (appelé $\mu_k$)

Il correspond à une friction du film passant à vitesse lente sur des rouleaux ou galets métalliques stationnaires ou bloqués. Il simule donc le comportement du film à être enroulé dans une cassette vidéo ou audio.

Le coefficient $\mu_k$ est mesuré selon une méthode analogue à celle décrite page 11 (paragraphe 3) dans la demande de brevet européen 66 997, avec cependant modification de certains paramètres de mesure, de manière à pouvoir élever la vitesse de défilement (vitesse de défilement : 5 m/minute ; angle d'embarrage : 195°C ; tension aval : 100 g ; largeur de bande : 2,5 cm). Le coefficient $\mu_k$ est mesuré à l'instant initial et après 100 m de défilement de la bande.

Coefficient de friction film/film :

C'est la détermination de la friction film/film mesurée au démarrage (coefficient statique) et en régime (valeur dynamique) quand un film se déplace par rapport à un autre, à faible vitesse.

Cette mesure est normalisée (norme 311A British Standard 2782).

Haze : cette mesure caractérise la turbidité des films ; elle est effectuée selon la norme ASTM D 1003.

Les films selon l'invention ont habituellement un coefficient $\mu_k$ inférieur à 0,3 et souvent inférieur à 0,25, et un coefficient de friction dynamique film/film inférieur à 0,6 ; la valeur du haze est bien inférieure à 10 % et souvent inférieur à 5 % pour une épaisseur équivalente de 10 microns.

Les films selon l'invention sont particulièrement remarquables en ce sens qu'en régime dynamique le coefficient $\mu_k$ demeure constant alors qu'on a procédé à une très grande longueur de défilement de la bande (plusieurs centaines de m).

Les films présentent par ailleurs de bonnes propriétés de machinabilité, liées sans nul doute à la présence d'un ensemble de points porteurs apportés par la charge grossière et correspondant à des émergences situées dans un ensemble de protubérances nombreuses mais moins élevées, celles-ci provenant des particules de charge fine. Des tests appropriés d'échappement d'air permettent de faire ressortir les qualités des films.

Un autre objet de la présente invention réside dans l'utilisation des films polyester chargés et biétirés pour la fabrication de bandes magnétiques. Ces bandes servent notamment pour des enregistrements d'images et/ou de son (bandes audio et vidéo).

Ces bandes magnétiques sont obtenues par revêtement des films polyester à l'aide d'un dépôt magnétique selon toute technique connue.

Les exemples illustrent l'invention.

<u>Exemples</u>

On prépare successivement par transesterification à partir de téréphtalate de diméthyle un lot de polytéréphtalate d'éthylène glycol non chargé et plusieurs lots de polytéréphtalate d'éthylène glycol chargé la charge fine ayant un facteur de forme supérieur à 0,08 est du dioxyde de titane, les lots de polyesters sont les suivants :

I   : polyester non chargé

II  : polyester chargé à 0,25 % de $TiO_2$ –
      diamètre médian en volume : 0,4 micron

III : polyester chargé à 0,25 % de $CaCO_3$ –
      diamètre médian en volume : 1 micron
      le facteur $\gamma$ est égal à 2,52

IV  : polyester chargé à 0,25 % de $CaCO_3$ –
      diamètre médian en volume : 0,7 micron

Les polyesters ont une viscosité intrinsèque égale à 0,65 dl/g.

Les charges ont été introduites sous forme de suspension glycolique que l'on a incorporée dans le milieu réactionnel en fin de réaction d'interéchange.

A partir de diverses proportions relatives des polymères I, II, (ou III) et IV, différents films ont été extrudés sur ligne pilote.

Après l'extrusion d'un film amorphe, celui-ci est étiré d'abord longitudinalement avec un taux de 3,7 environ à 90°C, puis transversalement avec un taux de 3,7 environ à 110°C.

La thermofixation des films ainsi obtenus se fait à 210°C.

Ces films ont une épaisseur de l'ordre de 10 microns.

Les caractéristiques de ces films ainsi que les proportions relatives des polymères I, II, (ou III) et IV qui ont servi à les préparer sont rassemblés dans le tableau ci-après.

| Réf. | épaisseur du film micron | charge % en poids dans polyester | % des différents polymères | Ø ** en micron | Haze % | $\mu_k$ i | $\mu_k$ 100 | RT micron | Ra micron | Δ s | Δ d |
|---|---|---|---|---|---|---|---|---|---|---|---|
| 1 | 12 | TiO$_2$ : 0,08<br>CaCO$_3$ : 0,01 | 64 I<br>32 II<br>4 III | 0,4<br><br>1 | 3,5 | 0,2 | 0,28 | 0,08 | 0,007 | 1 | 0,6 |
| 2 | 12 | TiO$_2$ : 0,08<br>CaCO$_3$ : 0,018 | 60,8 I<br>32 II<br>7,2 III | 0,4<br><br>1 | 4,5 | 0,2 | 0,22 | 0,08 | 0,008 | 0,9 | 0,55 |
| 3 | 10 | TiO$_2$ : 0,15<br>CaCO$_3$ : 0,018 | 32,8 I<br>60 II<br>7,2 IV | 0,4<br><br>0,7 | 5,8 | 0,2 | 0,23 | 0,09 | 0,009 | 0,8 | 0,5 |
| essai comparatif témoin A | 12 | TiO$_2$ : 0,08 | 32 II<br>68 I | 0,4 | 3,1 | 0,2 | 0,32 | 0,08 | 0,005 | ⩾ 1,5 | |
| essai comparatif témoin B | 12 | CaCO$_3$ : 0,06 | 73 II<br>27 I | 1 | 2,2 | 0,2 | 0,3 | 0,11 | 0,011 | ⩾ 1,5 | |

$*\begin{cases} & \text{coefficient friction film/métal} \\ \mu_k i : & \mu_k \text{ initial} \\ \mu_k 100 : & \mu_k \text{ dynamique après 100 m de défilement} \end{cases}$

$\Delta \begin{cases} & \text{coefficient friction film/film} \\ - & \text{statique } \mu_s \\ - & \text{dynamique } \mu_d \end{cases}$

** diamètre médian en volume

On observe, à la lecture du tableau, que les films selon l'invention ayant deux populations différentes de charge ont des faibles rugosités, des valeurs de haze peu élevées, et des coefficients $\mu_k$ n'évoluant que très peu durant le défilement de la bande.

Les essais comparatifs réalisés avec une charge unique conduisent à des films ayant des rugosités et des valeurs de haze du même ordre mais où les coefficients $\mu_k$ s'élèvent nettement plus rapidement.

L'exemple n° 3 a été transposé sur une ligne de production industrielle, les proportions respectives des divers polymères, la nature des charges et leur quantité demeurent identiques.

Les résultats sont les suivants :

– Haze : 4,7 %

– $R_t$ : 0,08

– $R_a$ : 0,008

– $\mu_k \begin{cases} i : 0,19 \\ 100 : 0,24 \end{cases}$

– $\begin{cases} \mu_s : 0,85 \\ \mu_d : 0,55 \end{cases}$

(le film a une épaisseur de 11 microns).

On observera la faible valeur des coefficients $\mu_k$, $\mu_s$ et $\mu_d$, lors de la mise en oeuvre de ce film, qui a une rugosité très faible comparativement aux films pour usage magnétique usuel ($R_T$ variant de 0,2 à 0,35 micron), ces films ont un excellent comportement dans l'application bande magnétique vidéo.

## REVENDICATIONS

1 - Films minces polyester étirés chargés, monocouche ou composites ayant une rugosité totale faible sur au moins une face et comportant au moins une couche polyester (A) et au moins une couche polymérique (B) externe chargée, la couche (B) pouvant être confondue avec la couche (A), les films étant caractérisés en ce que la couche (B) contient :

- 0,02 à 0,3 % d'une charge fine ayant un facteur de forme au moins égal à 0,08, la charge fine ayant un diamètre médian en volume inférieur à 0,5 micron.

- et moins de 0,02 % d'une charge grossière ayant un diamètre médian en volume égal ou supérieur à 0,5 micron, la charge grossière étant de nature différente de celle de la charge fine.

2 - Films selon la revendication 1, caractérisés en ce que le diamètre médian en volume de la charge grossière dans la couche (B) est inférieur à 2,5 microns.

3 - Films selon l'une des revendications 1 à 2, caractérisés en ce que le diamètre médian en volume de la charge grossière de la couche (B) est compris entre 0,5 micron et 1,5 microns.

4 - Films selon l'une des revendications 1 à 3, caractérisés en ce que dans la couche (B) la charge fine est du dioxyde de titane et en ce que la charge grossière est du carbonate de calcium.

5 - Films selon l'une des revendications 1 à 4, caractérisés en ce que dans la couche (B) la charge fine représente de 0,05 à 0,20 % du poids de la couche, et en ce que la charge grossière représente de 0,005 à 0,02 % en poids de la couche.

6 - Films selon l'une des revendications 1 à 5, caractérisés en ce que la rugosité totale de la couche (B) est au plus égale à 0,15 micron.

7 - Films selon l'une des revendications 1 à 6, caractérisés en ce que la couche (B) est en polyester.

8 - Films polyester monocouche selon l'une des revendications 1 à 7.

9 - Films composites selon l'une des revendications 1 à 7 et comportant au moins sur une face externe une couche (B).

10 - Films composites selon la revendication 9 dont toutes les couches sont en polyester.

11 - Films selon l'une des revendications précédentes et ayant au moins subi un traitement d'étirage dans deux directions orthogonales entre elles.

12 - Procédé de préparation de films polyester minces chargés étirés selon l'une des revendications 1 à 11, par extrusion ou coextrusion d'un film amorphe soumis ultérieurement à un traitement d'étirage, le film amorphe ou éventuellement étiré étant le cas échéant enduit par une couche polymérique chargée, le procédé étant caractérisé en ce que l'on introduit à titre d'agents glissants dans au moins une composition polymérique filmogène une charge constituée par :
- une charge fine de diamètre médian en volume inférieur à 0,5 micron, ayant un facteur de forme au moins égal à 0,08 et représentant de 0,02 à 0,3 % en poids de la couche
- une charge grossière de diamètre médian en volume égal ou supérieur à 0,5 micron et représentant moins de 0,02 % en poids de la couche.

13 - Procédé d'obtention de films polyester minces chargés étirés selon l'une des revendications 1 à 11, par extrusion ou coextrusion d'au moins un polyester chargé, le film amorphe étant soumis ultérieurement à un traitement d'étirage, le procédé étant caractérisé en ce que l'on introduit dans au moins une composition polyester une charge

19

0162788

constituée par :

- une charge fine de diamètre médian en volume inférieur à 0,5 micron, ayant un facteur de forme au moins égal à 0,08 et représentant de 0,02 à 0,3 % en poids du polyester
- une charge grossière de diamètre médian en volume supérieur ou égal à 0,5 micron et représentant moins de 0,02 % en poids du polyester.

14 - Procédé d'obtention de films polyester minces chargés étirés selon l'une des revendications 1 à 11, caractérisé en ce que l'on prépare un film polyester monocouche ou composite par extrusion, puis enduit avant ou après étirage le dit film avec une composition polymérique comportant une charge constituée par :

- une charge fine de diamètre médian en volume inférieur à 0,5 micron, ayant un facteur de forme supérieur à 0,08 et représentant de 0,02 à 0,3 % en poids de la couché
- une charge grossière de diamètre médian en volume égal ou supérieur à 0,5 micron et représentant moins de 0,02 % en poids de la couche.

15 - Utilisation des films selon l'une des revendications 1 à 11 pour l'obtention de bandes magnétiques.

**Office européen des brevets**

**RAPPORT DE RECHERCHE EUROPEENNE**

Numéro de la demande

EP 85 42 0062

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,X | DE-A-3 323 441 (FUJI PHOTO FILM) <br> * Revendications; page 24, tabelle * | 1-11 | C 08 J 5/18 <br> C 08 J 7/04 <br> G 11 B 5/704 |
| | --- | | |
| Y | DE-A-3 219 240 (TORAY) <br> * Revendication * | 1-14 | |
| A | | 15 | |
| | --- | | |
| Y | DE-A-2 807 147 (TEIJIN) <br> * Revendications * | 12-14 | |
| | --- | | |
| X,P <br> D | EP-A-0 124 291 (TEIJIN) <br><br> * Revendication * | 8,13 | |
| | --- | | **DOMAINES TECHNIQUES RECHERCHES (Int. Cl.4)** |
| A | FR-A-2 318 192 (MITSUBISHI) <br><br> ----- | | C 08 J <br> C 08 L <br> G 11 B |

Le présent rapport de recherche a été établi pour toutes les revendications

| Lieu de la recherche | Date d'achèvement de la recherche | Examinateur |
|---|---|---|
| LA HAYE | 09-07-1985 | VAN GOETHEM G.A.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82